# EUROPEAN PATENT SPECIFICATION

(11) **EP 0 509 293 B1**
(45) Date of publication and mention of the grant of the patent: **27.12.1995**
(21) Application number: 92105297.3
(22) Date of filing: 27.03.1992
(51) Int. Cl.: B65G 47/84, B65B 19/22, B65B 11/28

(54) **Article transferring/wrapping apparatus**
Vorrichtung zum Überführen und Verpacken
Dispositif de transfert et d'emballage

(30) Priority: 29.03.1991 JP 91725/91
(43) Date of publication of application: 21.10.1992
(73) Proprietor: Japan Tobacco Inc., Shinagawa-ku, Tokyo 140 (JP)
(72) Inventor: Imai, Hiroaki, c/o Japan Tobacco Inc., Kita-ku, Tokyo (JP)
(74) Representative: Reinhard - Skuhra - Weise & Partner

(56) References cited:
- GB-A- 1 425 009
- GB-A- 2 191 166
- US-A- 4 823 536

## Description

The invention refers to an article transferring and wrapping apparatus. In particular, the invention relates to an apparatus for transferring cigarettes of one package between a pair of wheels rotating at a high speed and for wrapping the cigarettes with a wrapping material during transfer.

US-A-4 823 536 discloses an apparatus for transfer of pakkets from one rotary feeding device to another. However, this apparatus does not provide a combined transfer and wrapping. This preknown apparatus comprises an article sending-side first rotary wheel having a plurality of first heads, an article receiving-side second rotary wheel having a plurality of second heads, said first and second rotary wheels being provided adjacent to each other and rotated in opposite direction at the same peripheral velocity and each being provided with a plurality of heads disposed on the same circumference, said article transferring apparatus transferring an article by one of said heads of said sending-side first wheel to one of said heads of a receiving-side second wheel, while said heads move through a transfer section as a portion in which said first and second rotary wheels are adjacent to each other. There are also known pivotal bodies pivotally provided to said rotary wheels, pivotal mechanisms for pivoting said pivotal bodies in response to rotation of said rotary wheels so that said pivotal body of said first rotary wheel and said pivotal body of said second rotary wheel are moved opposing each other while passing through said transfer section and a pair of plates provided to front end portions of said pivotal bodies for holding the article therebetween. However, it has to be noted that there is no opening or closing movement of pairs of plates which handle said packets.
Furthermore, the plate of the head of one wheel has a square projection in its side view, wherein the head of the other wheel has a square recess in its side view corresponding to the square projection of the plate of the first wheel. The projection of the first plate is inserted into the corresponding recess of the second plate, but the first plate and the second plate do not overlap each other. Therefore, the square projection of the first plate can only hold a center portion of the article and thus the article and even more a bundle of stacked cigarettes cannot be held securely. Furthermore, when both plates are associated with each other, the inner surfaces of the two-forked portions of a second plate slide to contact both ends of the article projected out from the projection of the first plate. Therefore, when the article is a bundle of unpacked cigarettes both ends of each of the cigarettes may be broken by a sliding contact within the surfaces of the two-forked projections of a second plate. In addition to that, a cigarette group can easily collapse and it is difficult to transfer a cigarette group directly as it is. It has to be further noted that, as the speed of cigarette manufacturing and ripping is increased recently, it is difficult to transfer a cigarette group between a pair of wheels at a high speed without collapsing it.

GB-A-2191166 refers to an apparatus for the transfer of sweets comprising gripper and wrapping wheels, which rotate at a constant speed and carry pairs of pivotable gripping elements and associated plungers for transferring sweets together with their wrappers from one wheel to the other. The pairs of grippers on the gripper wheel and the pairs of grippers on the wrapping wheel are each pivotal about spindles, respectively, by means of cams so that during movements over the transfer zone respective pairs of grippers are coaxially aligned but radially spaced from each other. The plungers of the grippers of the gripper wheel, which are provided with sweet receiving pockets and the plungers of the grippers of the wrapping wheels are each constructed as extensions of the connecting links of a fore-bar-linkage also comprising a crank pivoted about spindle axis and bearing a cam to effect plunger displacement. The grippers are opened and closed to further cams, and wrappers are cut from a web and fed to the grippers of the first wheel to be held thereagainst by an auxiliary gripper and partially folded over a held sweet by a fixed folder. On transfer the wrapper is folded to U-shape. However, it is to be noted that said gripping plates, which are formed as plates are not telescopically associated nor inserted into each other, and the mechanism of opening and closing said plates is used for holding and releasing an article.

The present invention has been made in view of the above-mentioned drawbacks of prior art and has as its object to provide an article transferring and wrapping apparatus which is capable of transferring one-package cigarettes (cigarette group) stack in e.g. three layers at a high speed without collapsing them and of wrapping the cigarette group during the transfer.

This object is obtained by the features of claim 1. Further advantageous embodiments are characterized in the dependent claims.

The apparatus according to the present invention has a sending-side first rotary wheel and a receiving side second rotary wheel. These wheels are arranged close to each other and are rotated in opposite directions at the same peripheral velocity. A plurality of heads are provided on each of these rotary wheels at the same pitch in the circumferential direction. The directions of the heads are controlled by a pivot mechanism so that they are directed in a predetermined direction in response to rotation of the rotary wheels. The heads on the rotary wheels accurately oppose each other while they are close to each other, i.e., while they move through a transfer section. An article is transferred from the heads of the first rotary wheel to the heads of the second rotary wheel while the heads move through the transfer section.

A pair of plates are provided to these heads. The article, e.g., aligned cigarette group is held between the plates. The plates of the heads of the receiving-side second rotary wheel are opened/closed by an opening/closing mechanism and are open when the corresponding heads move through the transfer section. Hence, while the heads move through the transfer section, the plates of the heads of the receiving first rotary wheel are inserted between open plates of the heads of the receiving-side second rotary wheel and are withdrawn. The article is transferred during this withdrawal.

Further, sliders are provided to the heads. These sliders move into or are withdrawn from the plates while the corresponding heads move through the transfer section, thereby pushing out and transferring an article held between the plates. When the slider of the sending-side first rotary wheel moves into the plates, the slider of the receiving-side second rotary wheel is withdrawn from the plates in synchronism with movement of the slider of the sending-side first rotary wheel.

In an embodiment of the present invention, fitting guide members are provided to the heads. These fitting guide members are fitted with and slide on each other as the corresponding heads oppose each other, and cause the heads to accurately oppose each other while they move through the transfer section.

To wrap an article, e.g., a cigarette group during transfer, a tacker member for edge-folding the end portion of wrapping paper wrapping the cigarette group is provided.

The apparatus having the above arrangement operates in the following manner. An article, e.g., a cigarette group is supplied to a head of one rotary wheel. This cigarette group is held between the pair of plates so that it will not collapse. While the head of the first rotary wheel holding the cigarette group and the head of the second rotary wheel pass through the transfer section, the directions of these heads are controlled by pivot mechanisms, and the heads of the two rotary wheels oppose each other. The plates of a head of the second rotary wheel are opened, the plates of the first rotary wheel are inserted between the plates of the second rotary wheel, and the cigarette group is transferred in this state. Hence, the cigarette group can be transferred at a high speed without collapsing.

While the heads move through the transfer section, the article is reliably transferred as it is pushed by the slider, the distance between the slider of the first rotary wheel and the slider of the second rotary wheel is maintained at a predetermined value, and the article is transferred as it is held between these sliders. Hence, even if the article is of a type which collapses easily like a cigarette group in which cigarettes are stacked in a staggered manner, it can be transferred stably.

When the heads move as they oppose each other, the fitting guide members provided to the heads slide on each other as they are fitted with each other, thereby guiding the heads to accurately opposing states. As a result, the play and other errors of the cam mechanism are removed, and the heads are constantly maintained to accurately oppose each other.

This invention can be more fully understood from the following detailed description when taken in conjunction with the accompanying drawings, in which:
Fig. 1 is a schematic front view showing an apparatus according to the first embodiment of the present invention;
Fig. 2 is a sectional view taken along the line S - S of Fig. 1;
Fig. 3 is a sectional view taken along the line A - A of Fig. 2;
Fig. 4 is a sectional view taken along the line B - B of Fig. 2;
Fig. 5 is a sectional view taken along the line C - C of Fig. 2;
Fig. 6 is a sectional view taken along the line D - D of Fig. 2;
Fig. 7 is a sectional view taken along the line E - E of Fig. 2;
Fig. 8 is a sectional view taken along the line F - F of Fig. 2;
Fig. 9 is a sectional view taken along the line G - G of Fig. 2;
Fig. 10 is a sectional view taken along the line H - H of Fig. 2; and
Fig. 11 is a schematic front view showing an apparatus according to the second embodiment of the present invention.

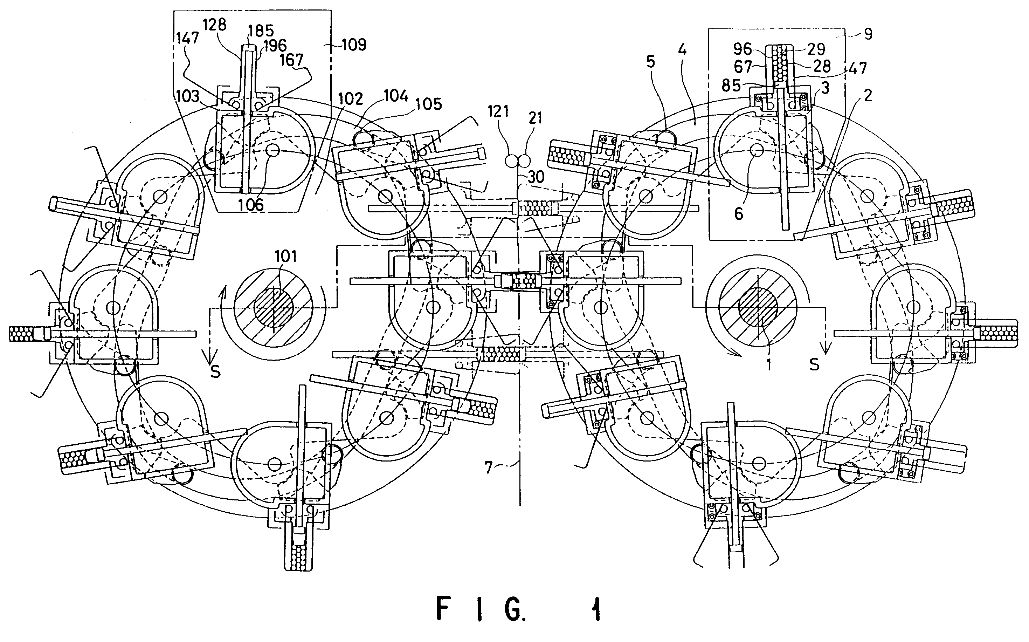

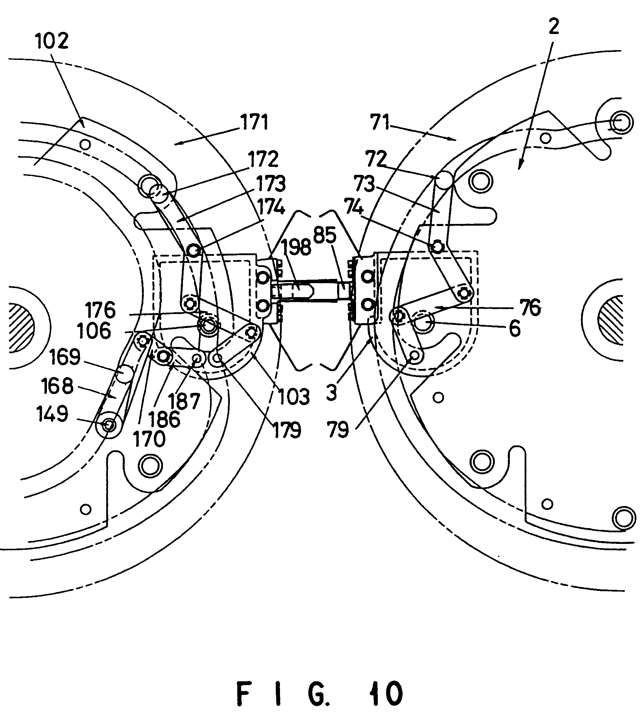

The preferred embodiments of the present invention will be described below. Figs. 1 to 10 show the first embodiment of the present invention. The apparatus of the first embodiment is an apparatus for transferring, as an article, a cigarette group (a unit of one-package cigarettes in which 20 cigarettes are stacked in three layers) obtained by stacking a total of 20 cigarettes aligned in three layers respectively including, e.g., 7, 6, and 7 cigarettes, in three layers in a staggered manner, and for wrapping this cigarette group by wrapping paper during transfer.

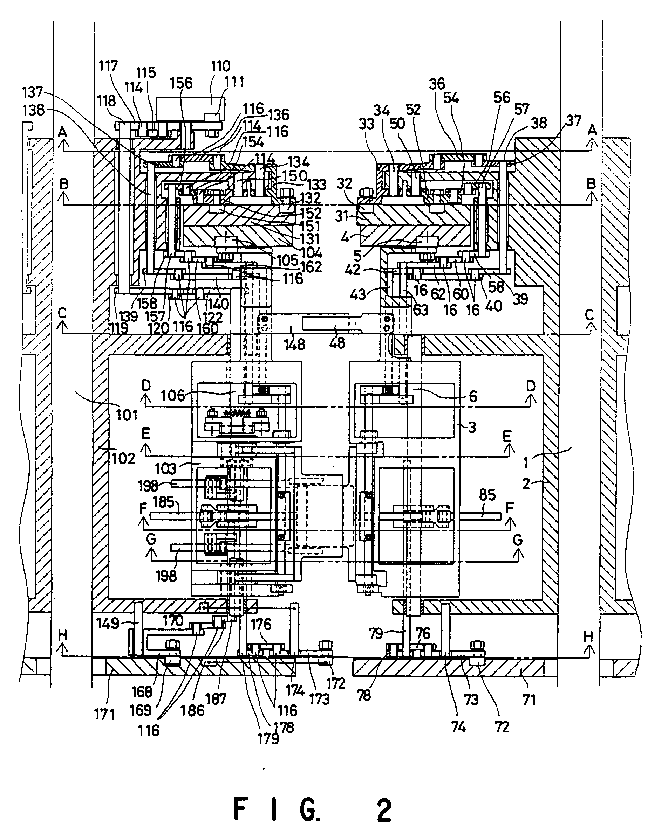

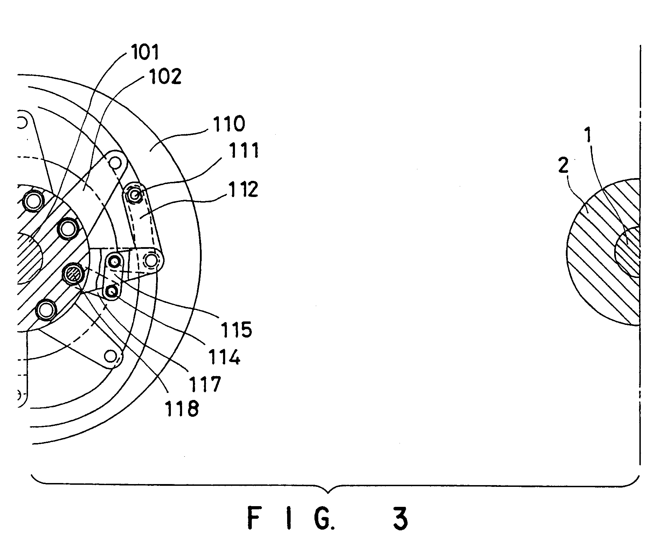

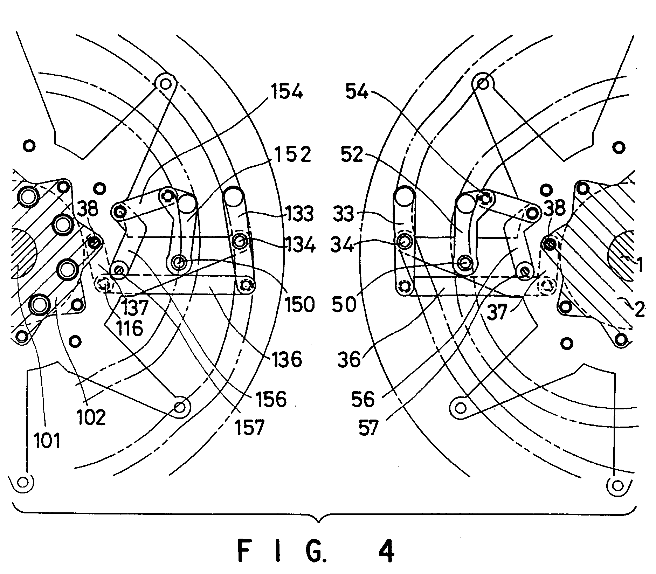

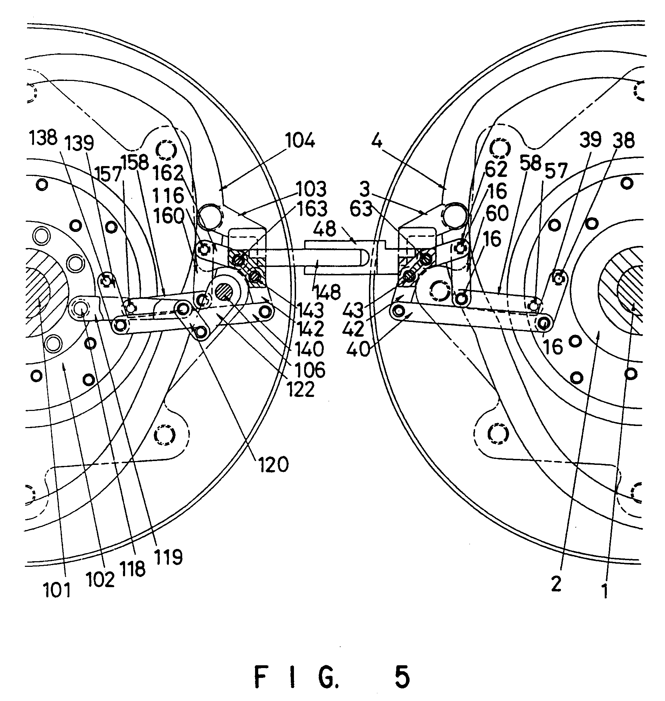

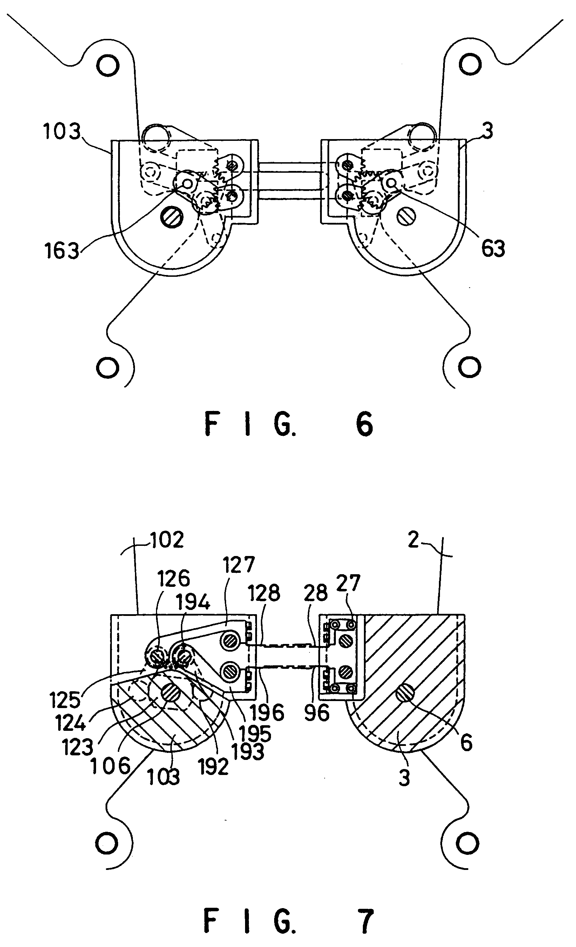

The overall arrangement of this apparatus will be described. As shown in Figs. 1 and 2, this apparatus has a pair of rotary wheels, i.e., a sending-side first rotary wheel 2 and a receiving-side second rotary wheel 102. The wheels 2 and 102 rotate about shafts 1 and 101, respectively, and the shafts 2 and 102 are disposed parallel to each other. The wheels 2 and 102 are rotated in opposite directions at the same speed by drive mechanisms (not shown). Hence, at a portion in which the wheels 2 and 102 are close to each other, they move in the same direction at the same peripheral velocity.

The wheels 2 and 102 have a plurality of, e.g., eight heads 9 and eight heads 109, respectively. The heads 9 or 109 are disposed at the same pitch on the same circumferential line. Each head 9 has a pivotal body 3, and each head 109 has a pivotal body 103. Each pivotal body 3 is mounted on the pivotal wheel 2 through a shaft 6, and each pivotal body 103 is mounted on the pivotal wheel 102 through a shaft 106. A pair of plates 28 and 96 are provided at the front end portion of the pivotal body 3, and a pair of plates 128 and 196 are provided at the front end portion of the pivotal body 103. An article, e.g., a cigarette group 29 aligned in three layers as described above is held between the plates 28 and 96 or between the plates 128 and 196. The second wheel 102, i.e., the receiving-side plates 128 and 196 are opened and closed by an opening/closing mechanism to be described later.

A pair of holder plates 47 and 67 are provided at the front end portion of the pivotal body 3, and a pair of holder plates 147 and 167 are provided at the front end portion of the pivotal body 103. These holder plates are opened and closed by opening/closing mechanisms to be described later. When the holder plates 47 and 67 or 147 and 167 are closed, they close the distal end portions of the plates 28 and 96 or 128 and 196 to hold the cigarette group 29 so that the cigarette group 29 held between the plates 28 and 96 or 128 and 196 may not collapse or drop by the centrifugal force.

The pivotal bodies 3 and 103 of the heads 9 and 109 have sliders 85 and 185, respectively. The sliders 85 and 185 are moved forward or backward by moving mechanisms to be described later. When the sliders 185 and 85 are moved backward and forward, respectively, the cigarette group 29 held between the plates 28 and 96 is pushed out; when the sliders 85 and 185 are moved backward and forward, respectively, the cigarette group 29 held between the plates 128 and 196 is pushed out. The slider which is moving backward holds one side surface of the cigarette group 29 so as to prevent it from collapsing.

When the first and second rotary wheels 2 and 102 are rotated in the opposite directions, the heads 9 and 109 are moved in the same direction at the same peripheral velocity as they pass through the transfer section in the vicinity of an intermediate line 7 between the wheels 2 and 102. In response to the rotation of the rotary wheels 2 and 102, the pivotal bodies 3 and 103 of the heads 9 and 109 are pivoted to oppose each other at this transfer section. Hence, when the heads 9 and 109 are moved through this section, they oppose each other. Then, the plates 28 and 96 of the head 9 of the first rotary wheel 2 are inserted between the plates 128 and 196 of the head 109 of the second wheel 102. At this time, the slider 185 of the head 109 of the second rotary wheel 102 is moved backward, and thereafter the plates 28 and 96 of the first rotary wheel 2 are withdrawn from the portion between the plates 128 and 196 of the second rotary wheel 102. At this time, the slider 85 of the head 9 of the first wheel 2 extends into a portion between the plates 28 and 96 to transfer the cigarette group 29 held between the plates 28 and 96 from the head 9 of the first rotary wheel 2 to the head 109 of the second rotary wheel 102.

Wrapping paper 30 is supplied by a pair of rollers 21 and 121 along the intermediate line 7. When the plates 28 and 96 of the first head 9 are inserted between the plates 128 and 196 of the second head 109, the wrapping paper 30 is folded in the U-shaped manner, and the cigarette group 29 is wrapped by the wrapping paper 30.

A cigarette group 29 is inserted between the plates 28 and 96 on the first wheels 2 in a direction perpendicular to the surface of the sheet of Fig. 1 at a position substantially opposite to the transfer section described above. On the second wheel 102 side, the holder plates 147 and 167 are opened at a position substantially opposite to the transfer section described above, and the slider 185 is moved forward to push out the cigarette group 29 in order to transfer it to the subsequent process.

The arrangements of the respective components described above will be described. As shown in Fig. 2, each of the wheels 2 and 102 constitutes a substantially cylindrical shape having three flange portions. The pivotal bodies 3 and 103 are pivotally supported between the two front-side flange portions by the shafts 6 and 106, respectively.

Reference numerals 4 and 104 denote stationary cam members, respectively. Cam followers 5 and 105 are fitted in the circumferential cam grooves of the cam members 4 and 104, respectively, and the cam followers 5 and 105 are coupled to the pivotal bodies 3 and 103 through links, respectively. Hence, when the wheels 2 and 102 are rotated, the directions of the pivotal bodies 3 and 103 are controlled in response to this rotation so that they are directed in predetermined directions. Then, when the pivotal bodies 3 and 103 are moved through the transfer section, they constantly oppose each other.

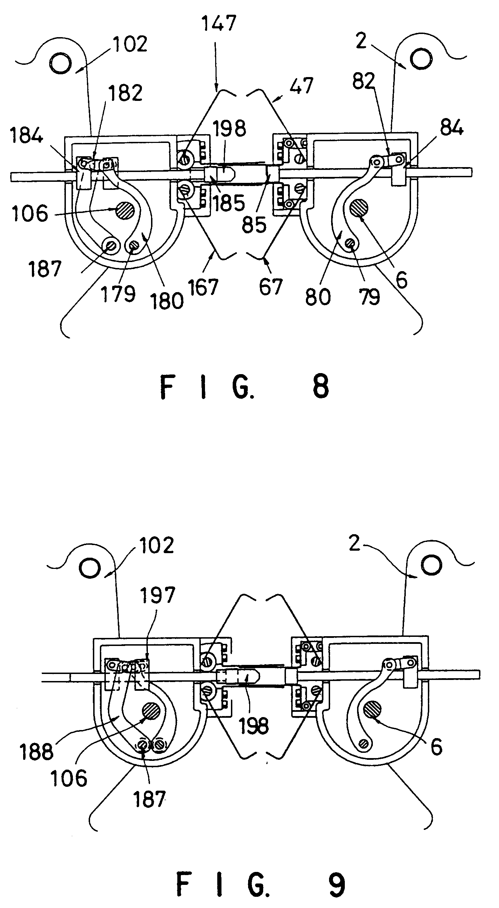

Fitting guide members 48 and 148 respectively project from the pivotal bodies 3 and 103 of the heads 9 and 109 in predetermined directions, as shown in Figs. 2 and 5. The fitting guide members 48 and 148 are fitted with and slide on each other when the pivotal bodies 3 and 103 oppose each other. Hence, when the pivotal bodies 3 and 103 oppose each other and move through the predetermined transfer section, the fitting guide members 48 and 148 are fitted with and slide on each other to eliminate an adverse influence, e.g., a play of the cam mechanism described above, thereby maintaining the pivotal bodies 3 and 103 to accurately oppose each other.

The mechanism for opening and closing the plates 128 and 196 of the second wheel 2 has the following arrangement. That is, a stationary cam 110 is provided to this mechanism, as shown in Figs. 2 and 3, and a cam follower 110 is fitted in the circumferential cam groove of this cam 110. The cam follower 111 is coupled to the shaft 106 through a link 115, a lever 117, a shaft 118, a lever 119, a link 120, and a lever 122. The cam groove of the cam 110 causes the shaft 106 to pivot while the head 109 of the second wheel 102 moves through the transfer section.

As shown in Fig. 7, a cam 123 is mounted on the shaft 106, and the cam 123 is pivoted together with the shaft 106. Cam followers 124 and 192 rotatably contact the cam 123, and the cam followers 124 and 192 are coupled to the plates 128 and 196 through levers 125 and 193, shafts 126 and 194, and levers 127 and 195. Thus, when the head 109 passes through the transfer section, the plates 128 and 196 are opened by the opening/closing mechanism described above to increase the distance between them, and the plates 28 and 96 of the head 9 of the first wheel 2 are inserted between the plates 128 and 196. When the plates 28 and 96 of the first wheel 2 are withdrawn from the portion between the plates 128 and 196, the plates 128 and 196 are closed to hold the cigarette group 29 which has been transferred to them so as not to collapse it.

The cam mechanisms for opening/closing the holder plates 47 and 67, and 147 and 167 have an arrangement as shown in Figs. 2, 4, 6, and 8. The cam mechanisms on the first and second wheels 2 and 102 side have similar arrangements. As their operations for opening/closing the corresponding holder plates are slightly different from each other, the shapes of the cam grooves are different from each other accordingly.

That is, stationary cams 31 and 131 are provided in the vicinities of the wheels 2 and 102, respectively, and two circumferential cam grooves are formed in each of the cams 31 and 131. Cam levers 33 and 52, and 133 and 152 are pivotally mounted on the wheels 2 and 102 by stud pins 34 and 50, and 132 and 150, respectively, and cam followers 32 and 51, and 132 and 151 are mounted on the distal end portions of the cam levers 33 and 52, and 133 and 152, respectively, and fitted in the corresponding cam grooves.

The cam levers 33 and 52 are coupled to shafts 38 and 57 through links 36 and 54 and levers 37 and 56, respectively, and are further coupled to shafts 43 and 63 through levers 39 and 58, links 40 and 60, and levers 42 and 162, respectively. The cam levers 133 and 152 are coupled to shafts 138 and 157 through links 136 and 154 and levers 137 and 156, respectively, and are further coupled to shafts 143 and 163 through levers 139 and 158, links 140 and 160, and levers 142 and 162, respectively. The holder plates 47, 67, 147, and 167 are mounted on the shafts 43, 63, 143, and 163, respectively. Hence, these holder plates are kept open by these opening/closing mechanisms as they pass through the transfer section, and the cigarette groove 29 is transferred from the head 9 of the first wheel 2 to the head 109 of the second wheel 102. On the second wheel 102 side, the holder plates 147 and 167 are also open when the cigarette group is to be transferred from the wheel 102 to the subsequent process, and the corresponding cam grooves are formed to perform this operation.

The drive mechanisms for reciprocating the sliders 85 and 185 have arrangements as shown in Figs. 2 and 8. That is, reference numerals 71 and 171 denote stationary cams, and cam followers 72 and 172 are fitted in circumferential cam grooves formed in the cams 71 and 171, respectively. Referring to Fig. 2, the cam followers and cam levers of the second wheel 102 are drawn at positions disengaged from the cam grooves so that they do not overlap in the drawing.

Stud pins 74 and 174 are mounted on the wheels 2 and 102, respectively, and cam levers 73 and 173 are pivotally supported by the stud pins 74 and 174, respectively. The cam followers 72 and 172 are mounted on the distal end portions of the cam levers 73 and 173, respectively. The cam levers 73 and 173 are coupled to shafts 79 and 179 through links 76 and 176 and the levers 56 and 156, respectively. The pivotal movements of the shafts 79 and 179 are converted to reciprocal linear movements of the sliders 85 and 185 by arms 80 and 180, links 82 and 182, and link blocks 84 and 184, respectively.

The sliders 85 and 185 are moved forward and backward by the drive mechanisms described above in response to the rotations of the wheels 2 and 102, respectively. For example, in the transfer section, the slider 85 of the first wheel 2 is moved forward, and the slider 185 of the second wheel 102 is moved backward to transfer the cigarette group 29. At a position substantially opposite to the transfer section, the slider 185 of the second wheel 102 is moved forward to push out a held cigarette group 29 in order to transfer it to the subsequent process.

In the apparatus of this embodiment, the cigarette group 29 is wrapped with the wrapping paper 30 while it is being transferred. In order to fold the side edge portion of the wrapping paper 30 wrapping the cigarette group therein, an edge folding mechanism as shown in Figs. 2, 8, and 10 is provided to the second wheel 102.

More specifically, a cam lever 168 is pivotally supported on the second wheel 2 by a stud pin 149. A cam follower 169 is provided on the distal end portion of the cam lever 168. The stationary cam 171 is provided in the vicinity of the second wheel 102, and the cam follower 169 is fitted in the circumferential cam groove of the cam 171. The cam lever 168 is coupled to a shaft 187 through a link 170 and a lever 186, and the shaft 187 is pivotally provided in the pivotal body 103. Edge folding members or tacker members 198 are provided to two sides of the pivotal body 103 to be capable of being moved forward and backward. The pivot movement of the shaft 187 is converted to the reciprocal linear movements of the edge folding members 198 by an arm 188, a link 190, and a link block 197.

The apparatus of the present invention having the above arrangement operates in the following manner. The first and second rotary wheels 2 and 102 rotate in the opposite directions, as indicated by arrows in Fig. 1, at the same peripheral velocity.

When one of the heads 9 of the first wheel 2 is moved to a position substantially opposite to the transfer section, a cigarette group 29 is inserted in the plates 28 and 96 from a unit of the previous process in a direction perpendicular to the surface of Fig. 1. In this case, the holder plates 47 and 67 are kept closed. Since the cigarette group 29 is held between the plates 28 and 96 and the holder plates 47 and 67 are closed, the cigarette group 29 is held as it is surrounded by the plates 28 and 96 and the holder plates 47 and 67 and will not collapse.

When the head 9 is moved to the transfer section, the direction of the pivotal body 3 is controlled, and the direction of the pivotal body 103 of the head 109 of the second wheel 102 is similarly controlled. The heads 9 and 109 are directed to the opposite directions until they finish passing through the transfer section. At this time, the fitting guide members 48 and 148 slide on each other as they are engaged with each other and accurately maintained to have the opposing postures until the heads 9 and 109 finish passing through the transfer section.

While the heads 9 and 109 pass through the transfer section, the holder plates 47 and 67, and 147 and 167 of the first and second wheels 2 and 102, respectively, are kept open by the cam mechanisms described above to prevent interfering with each other and to enable transfer of the cigarette group 29. The plates 128 and 196 of the second wheel 102 are slightly kept open by the cam mechanism described above, and the plates 28 and 96 of the first wheel 2 are fitted between the plates 128 and 196.

At this time, the wrapping paper 30 is supplied to the portion between the wheels 2 and 102 by the rollers 21 and 121 along the intermediate line 7. When the cigarette group 29 held in the above manner coincides with the intermediate line 7 between the rotary wheels 2 and 102, the holder plates 47 and 67 are opened to release the cigarette group 29. Simultaneously, the slider 185 is brought into contact with the wrapping paper 30 and the cigarette group 29 to hold them, thereby preventing the cigarette group 29 from collapsing and holding the wrapping paper 30. In this case, the feed speed of the wrapping paper 30 is set such that the relative speed of the wrapping paper 30 and the cigarette group 29 in the direction of the intermediate line 7 becomes zero.

The slider 185 of the second wheel 102 is moved backward at a speed corresponding to the speed of the forward movement of the slider 85 of the first wheel 2 to hold the cigarette group 29. When the wheel 2 and 102 are rotated, the cigarette group 29 moves into the portion between the open plates 128 and 196 of the second wheel 102, and the wrapping paper 30 also moves into the portion between the plates 128 and 196 simultaneously. As a result, the wrapping paper 30 is clamped by the plates 28 and 96, and 128 and 196 which are fitted with each other in the same manner as described above, is folded in a substantially U-shaped manner to wrap the cigarette group 29, and is subjected to edge folding by the tacker member 198.

Subsequently, the slider 185 of the second wheel 102 is moved backward by the drive mechanism described above, and the slider 85 of the first wheel 2 is moved forward, so that the cigarette group 29 held between the plates 28 and 96 of the first wheel 1 is transferred to the portion between the plates 128 and 196 of the second wheel 102. The plates 128 and 196 of the second wheel 102 are open only slightly to receive the plates 28 and 96 of the first wheel 2. Thus, even when the cigarette group 29 is transferred to the portion between the plates 128 and 196 of the second wheel 102, it will not collapse.

When the cigarette group 29 is transferred at the transfer section in this manner, the holder plates 147 and 167 of the second wheel 102 are closed by the cam mechanism to hold the cigarette group 29 wrapped with the wrapping paper 30 so that it will not drop.

Simultaneously, the edge holding member 198 is moved forward to fold the side edge portion of the wrapping paper 30 to form an edge-folded portion, thereby substantially shaping the wrapping paper 30 into a form of package.

When the head 109 of the second wheel 102 which holds the cigarette group 29 is moved to the position substantially opposite to the transfer section, the holder plates 147 and 167 are opened again by the cam mechanism, and the slider 185 is moved forward by the drive mechanism to push out the cigarette group 29 wrapped with the wrapping paper 30 and to transfer it to a unit for executing the following process. Note that each edge folding member 198 is moved forward by the cam mechanism while the cigarette group 29 is transferred from the second wheel 102 to the following process so that the folded edge of the wrapping paper 30 will not be straightened.

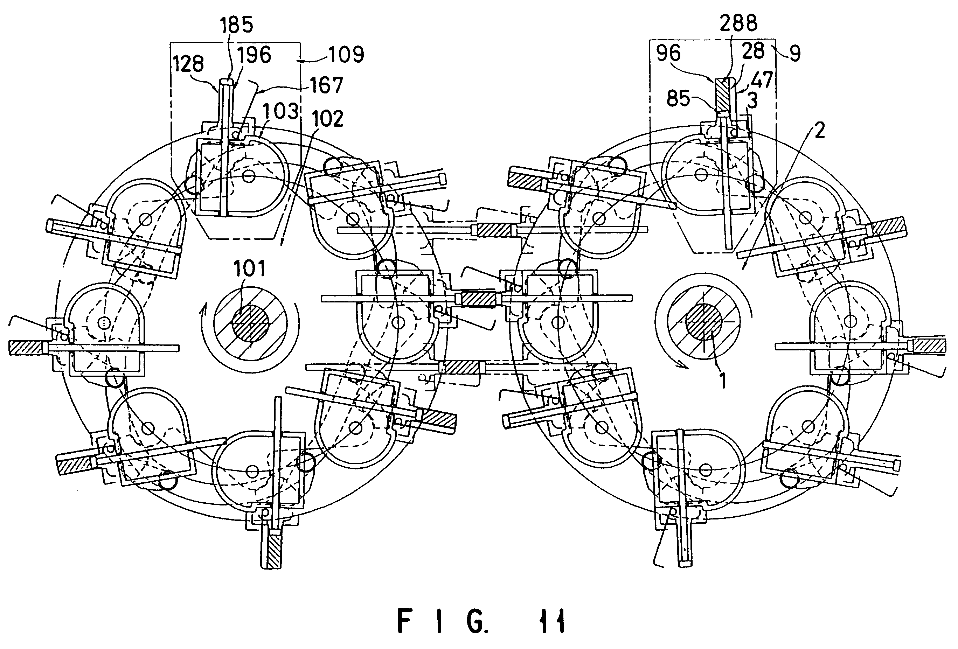

The above embodiment exemplifies the apparatus for transferring the cigarette group 29 and for wrapping the cigarette group 29 during transfer. However, the present invention can be similarly applied to an apparatus which does not perform wrapping but simply transfers an article. Fig. 11 shows an apparatus according to the second embodiment of the present invention which transfers an article, e.g., an already wrapped cigarette package 288.

Since the cigarette package 288 is already wrapped, only one holder plate 47 or 167 for preventing drop of the cigarette package is provided to the apparatus. No rollers for supplying wrapping paper are provided, as a matter of course. Excluding these points, the second embodiment has the same arrangement as that of the first embodiment described above. Portions in Fig. 11 corresponding to those of the first embodiment are denoted by the same reference numerals and a detailed description thereof is omitted.

The present invention is not limited to an apparatus for transferring or transferring/wrapping cigarettes but can be apparently similarly applied to an apparatus for transferring or transferring/wrapping other articles.

## Claims

1. An article transferring and wrapping apparatus comprising:
at least an article sending-side first rotary wheel (2) having a plurality of first heads (9);
at least an article receiving-side second rotary wheel (102) having a plurality of second heads (109), said first and second rotary wheels being provided adjacent to each other, rotated in opposite directions at the same peripheral velocity and transferring an article (29) held by one of said first heads (9) to one of said second heads (102) while said first and second heads move through a transfer section in which said first and second rotary wheels (2, 102) are adjacent to each other; and
a wrapping paper sheet supplying mechanism for supplying wrapping paper sheets (30) into a space between said first and second heads (9, 109) in the transfer section, thereby wrapping the article (29) with the wrapping paper sheet (30), while the article is being transferred between first and second heads (9, 109) in the transfer section,
each of said first and second heads (9, 109) including:
a pair of pivotal bodies (3, 103) pivotally connected to corresponding one of said first and second rotary wheels (2, 102);
mechanisms (4, 104, 5, 105) for pivoting said pivotal bodies (3, 103) in response to rotation of the corresponding one of said first and second rotary wheels (2, 102) so that said pivotal bodies (3, 103) of each of said first and second heads (9, 109) are moved to oppose each other while passing through said transfer section;
a pair of plates (28, 96, 128, 196) projecting from said pivotal bodies (3, 103), capable of being opened and closed so as to widen or narrow a space between said pair of plates (28, 96, 128, 196), and capable of holding the article therebetween;
an opening and closing mechanism (110, 111) for opening and closing said pair of plates (28, 96, 128, 196), said plates of each of said heads of said second rotary wheel (102) being opened in opposing directions by said opening and closing mechanism (110, 111) while passing through said transfer section,
a pair of plates (28, 96) of each of said first heads (9) being closed by means of said opening and closing mechanism so as to hold the article while each of said first heads (9) is passing through said transfer section, and said pair of plates of each of said first heads (9) holding the article, being inserted into an open space between said pair of plates (128, 196) of each of said second heads (109) and by further rotation of said rotary wheels (2, 102) being withdrawn from said open space, said first and second heads (9, 109) further comprising
a cam mechanism having a slider (85, 185) between said pair of plates, being movable forwards and backwards, the slider (85) of each of said first heads (9) being moved forwardly so as to push the article (29) held between said pair of plates (28, 96) of each of said first heads (9), when said pair of plates (28, 96) of each of said first heads (9) is withdrawn from the space between said pair of plates (128, 196) of each of said second heads (109), thereby transferring the article into the open space between said pair of plates (128, 196) of each of said second heads (109), and the slider (185) of each of said second heads (109) being moved backwardly, in response to the forward movement of the slider (85) of each of said first heads (9), to hold the article in cooperation with said forwardly moved slider (85) of each of said first heads (9).

2. An apparatus according to claim 1, characterized in that said wrapping paper sheet supply mechanism comprises rollers (21, 12) for supplying a sheet-type wrapping material, which are provided between said first and second rotary wheels (2, 102).

3. An apparatus according to claim 1, characterized in that holder plates (47, 67, 147, 167) for preventing the article held between said plates (28, 96, 128, 196) from dropping are provided to said heads (9, 109), said holder plates being kept open by opening mechanisms (31, 32, 51, 131, 132, 151) when said heads move through said transfer section to enable transfer of the article.

4. An apparatus according to claim 1, characterized in that fitting guide members (48, 148) are provided on said heads (9, 109), said fitting guide member (48) of said head (9) of said first rotary wheel (2) being slidably fitted with said fitting guide member (148) of said head (109) of said second rotary wheel (102) while said heads (9, 109) move through said transfer section in order to guide said heads to opposite states while said heads of said first and second rotary wheels move through said transfer section.

## Patentansprüche

1. Vorrichtung zum Überführen und Verpacken eines Gegenstands, mit
zumindest einem gegenstandsbeschickungsseitigen ersten Drehrad (2), das eine Mehrzahl von ersten Köpfen (9) hat,
zumindest einem gegenstandsaufnahmeseitigen zweiten Drehrad (102), das eine Mehrzahl von zweiten Köpfen hat, wobei die ersten und zweiten Drehräder benachbart zueinander vorgesehen, in entgegengesetzten Richtungen mit derselben Umfangsgeschwindigkeit drehangetrieben sind, und einen durch einen der ersten Köpfe (9) gehaltenen Gegenstand (29) zu einem der zweiten Köpfe (102) überführen, während die ersten und zweiten Köpfe sich durch einen Überführungsabschnitt bewegen, in welchem die ersten und zweiten Drehräder (2, 102) benachbart zueinander sind, und
einem Verpackungspapierblatt-Zufuhrmechanismus zum Zuführen von Verpackungspapierblättern (30) in einen Raum zwischen den ersten und zweiten Köpfen (9, 109) in dem Überführungsabschnitt, wodurch der Gegenstand (29) mit dem Verpackungspapierblatt (30) verpackt wird, während der Gegenstand zwischen den ersten und zweiten Köpfen (9, 109) in dem Überführungsabschnitt überführt wird, wobei jeder der ersten und zweiten Köpfe (9, 109) umfaßt:
ein Paar von Schwenkkörpern (3, 103), die mit einem entsprechenden der ersten und zweiten Drehräder (2, 102) schwenkbar verbunden sind,
Mechanismen (4, 104, 5, 105) zum Verschwenken der Schwenkkörper (3, 103) ansprechend auf die Drehbewegung des entsprechenden der ersten und zweiten Drehräder (2, 102) derart, daß die Schwenkkörper (3, 103) von jedem der ersten und zweiten Köpfe (9, 109) so bewegt werden, daß sie einander gegenüberliegen, während sie durch den Überführungsabschnitt laufen,
ein Paar von Platten (28, 96, 128, 196), die von den Schwenkkörpern (3, 103) vorspringen und dazu in der Lage sind, geöffnet und geschlossen zu werden, damit ein Raum zwischen dem Paar von Platten (28, 96, 128, 196) erweitert und verengt wird, und die dazu in der Lage sind, den Gegenstand dazwischen zu halten,
einen Öffnungs- und Schließmechanismus (110, 111) zum Öffnen und Schließen des Paars von Platten (28, 96, 128, 196), wobei die Platten von jedem der Köpfe des zweiten Drehrads (102) in gegenüberliegenden Richtungen durch den Öffnungs- und Schließmechanismus (110, 111) geöffnet werden, während sie durch den Überführungsabschnitt laufen,
wobei ein Paar von Platten (28, 96) von jedem der ersten Köpfe (9) mittels des Öffnungs- und Schließmechanismus derart geschlossen werden, daß es den Gegenstand hält, während jeder der ersten Köpfe (9) durch den Überführungsabschnitt läuft, und wobei das Plattenpaar von jedem der ersten Köpfe (9), das den Gegenstand hält, in den offenen Raum zwischen das Plattenpaar (128, 196) von jedem der zweiten Köpfe (109) eingeführt und durch eine weitere Drehung der Drehräder (2, 102) aus dem offenen Raum herausgezogen wird, wobei die ersten und zweiten Köpfe (9, 109) außerdem umfassen:
einen Nockenmechanlsmus mit einem Gleitstück (85, 185) zwischen dem Plattenpaar, der vor- und zurückbewegbar ist, wobei das Gleitstück (85) eines jeden der ersten Köpfe (9) derart vorwärts bewegt wird, daß der Gegenstand (29) ausgestoßen wird, der zwischen dem Plattenpaar (28, 96) von jedem der ersten Köpfe (9) gehalten wird, wenn das Plattenpaar (28, 96) von jedem der ersten Köpfe (9) aus dem Raum zwischen dem Plattenpaar (128, 196) von jedem der zweiten Köpfe (109) herausgezogen wird, wodurch der Gegenstand in den offenen Raum zwischen dem Plattenpaar (128, 196) von jedem der zweiten Köpfe (109) überführt wird, und wobei das Gleitstück (185) von jedem der zweiten Köpfe (109) ansprechend auf die Vorwärtsbewegung des Gleitstücks (85) von jedem der ersten Köpfe (9) zurückbewegt wird, um den Gegenstand in Zusammenwirkung mit dem vorwärtsbewegten Gleitstück (85) von jedem der ersten Köpfe (9) zu halten.

2. Vorrichtung nach Anspruch 1, dadurch gekennzeichnet, daß der Verpackungspapierblatt-Zufuhrmechanismus Rollen (21, 12) zum Zuführen eines Verpackungsblattmaterials umfaßt, die zwischen den ersten und zweiten Drehrädern (2, 102) vorgesehen sind.

3. Vorrichtung nach Anspruch 1, dadurch gekennzeichnet, daß Halterplatten (47, 67, 147, 167) an den Köpfen (9, 109) vorgesehen sind, um zu verhindern, daß der zwischen den Platten (28, 96, 128, 196) gehaltene Gegenstand herunterfällt, wobei die Halterplatten durch die Öffnungsmechanismen (31, 32, 51, 131, 132, 151) offengehalten werden, wenn die Köpfe sich durch den Überführungsabschnitt bewegen, um die Überführung des Gegenstands zu ermöglichen.

4. Vorrichtung nach Anspruch 1, dadurch gekennzeichnet, daß Verbindungsführungselemente (48, 148) auf den Köpfen (9, 109) vorgesehen sind, wobei das Verbindungsführungselement (48) des Kopfs (9) des ersten Drehrads (2) mit dem Verbindungsführungselement (148) des Kopfs (109) des zweiten Drehrads (102) gleitend angebracht ist, während die Köpfe (9, 109) sich durch den Überführungsabschnitt bewegen, um die Köpfe zu gegenüberliegenden Stellen zu überführen, während die Köpfe der ersten und zweiten Drehräder sich durch den Überführungsabschnitt bewegen.

## Revendications

1. Appareil de transfert et d'emballage d'articles comprenant :
au moins une première roue tournante (2), côté émission d'articles, comportant une pluralité de premières têtes (9) ;
au moins une deuxième roue tournante (102), côté réception d'articles, comportant une pluralité de deuxièmes têtes (109), lesdites première et deuxième roues tournantes étant prévues à proximité l'une de l'autre, en rotation dans des directions opposées à la même vitesse périphérique, et transférant un article (29) maintenu par l'une desdites premières têtes (9) jusqu'à l'une desdites deuxièmes têtes (102), tandis que lesdites premières et deuxièmes têtes se déplacent à travers une zone de transfert dans laquelle lesdites première et deuxième roues tournantes (2, 102) sont à proximité l'une de l'autre ; et
un mécanisme d'alimentation de feuilles de papier d'emballage destiné à fournir des feuilles de papier d'emballage (30) dans un espace entre lesdites premières et deuxièmes têtes (9, 109) de la zone de transfert, enveloppant de ce fait l'article (29) avec la feuille de papier d'emballage (30), tandis que l'article est transféré entre les premières et deuxièmes têtes (9, 109) dans la zone de transfert, chacune desdites premières et deuxièmes têtes (9, 109) comprenant :
deux corps de pivotement (3, 103) reliés de manière pivotante à l'une correspondante desdites première et deuxième roues tournantes (2, 102) ;
des mécanismes (4, 104, 5, 105) destinés à faire pivoter lesdits corps de pivotement (3, 103) en réponse à une rotation de l'une correspondante desdites première et deuxième roues tournantes (2, 102), de sorte que lesdits corps de pivotement (3, 103) de chacune desdites premières et deuxièmes têtes (9, 109) sont déplacés de façon à être opposés l'un à l'autre, tout en traversant ladite zone de transfert ; deux plaques (28, 96, 128, 196) faisant saillie depuis lesdits corps de pivotement (3, 103), capables d'être ouvertes et fermées de façon à élargir ou à rétrécir un espace entre lesdites deux plaques (28, 96, 128, 196) et capables de maintenir l'article entre elles ;
un mécanisme d'ouverture et de fermeture (110, 111) destiné à ouvrir et à fermer lesdites deux plaques (28, 96, 128, 196), lesdites plaques de chacune desdites têtes de ladite deuxième roue tournante (102) étant ouvertes dans des directions opposées par ledit mécanisme d'ouverture et de fermeture (110, 111), tout en traversant ladite zone de transfert.
deux plaques (28, 96) de chacune desdites premières têtes (9) étant fermées au moyen dudit mécanisme d'ouverture et de fermeture, de façon à maintenir l'article tandis que chacune desdites premières têtes (9) traverse ladite zone de transfert, et lesdites deux plaques de chacune desdites premières têtes (9) maintenant l'article qui est inséré dans un espace ouvert entre lesdites deux plaques (128, 196) de chacune desdites deuxièmes têtes (109) et qui, par une autre rotation desdites roues tournantes (2, 102), est retiré dudit espace ouvert, lesdites premières et deuxièmes têtes (9, 109) comprenant en outre :
un mécanisme à came comportant une pièce coulissante (85, 185) entre lesdites deux plaques, pouvant se déplacer en avant et en arrière, la pièce coulissante (85) de chacune desdites premières têtes (9) étant déplacée vers l'avant de façon à pousser l'article (29) maintenu entre lesdites deux plaques (28, 96) de chacune desdites premières têtes (9), lorsque lesdites deux plaques (28, 96) desdites premières têtes (9) sont retirées de l'espace entre lesdites deux plaques (128, 196) de chacune desdites deuxièmes têtes (109), transférant de ce fait l'article dans l'espace ouvert entre lesdites deux plaques (128, 196) de chacune desdites deuxièmes têtes (109), et la pièce coulissante (185) de chacune desdites deuxièmes têtes (109) étant déplacée vers l'arrière en réponse au déplacement vers l'avant de la pièce coulissante (85) de chacune desdites premières têtes (9), pour maintenir l'article de façon qu'il coopère avec ladite pièce coulissante (85) déplacée vers l'avant de chacune desdites premières têtes (9).

2. Appareil selon la revendication 1, caractérisé en ce que ledit mécanisme d'alimentation de papier d'emballage comprend des rouleaux (21, 12), destinés à fournir un matériau d'emballage de type feuille, qui sont prévus entre lesdites première et deuxième roues tournantes (2, 102).

3. Appareil selon la revendication 1, caractérisé en ce que des plaques de maintien (47, 67, 147, 167), destinées à empêcher l'article maintenu entre lesdites plaques (28, 96, 128, 196) de tomber, sont prévues auxdites têtes (9, 109), lesdites plaques de maintien étant maintenues ouvertes par des mécanismes d'ouverture (31, 32, 51, 131, 132, 151) lorsque lesdites têtes se déplacent à travers ladite zone de transfert afin de permettre le transfert de l'article.

4. Appareil selon la revendication 1, caractérisé en ce que des éléments de guidage d'emboîtement (48, 148) sont prévus sur lesdites têtes (9, 109), ledit élément de guidage d'emboîtement (48) de ladite tête (9) de ladite première roue tournante (2) étant emboîté de manière coulissante dans ledit élément de guidage d'emboîtement (148) de ladite tête (109) de ladite deuxième roue tournante (102), tandis que lesdites têtes (9, 109) se déplacent à travers ladite zone de transfert afin de guider lesdites têtes jusqu'à des états opposés, tandis que lesdites têtes desdites première et deuxième roues tournantes se déplacent à travers ladite zone de transfert.
